# EUROPEAN PATENT SPECIFICATION

(11) **EP 1 896 751 B1**
(45) Date of publication and mention of the grant of the patent: **25.02.2009**
(21) Application number: 06744170.9
(22) Date of filing: 07.06.2006
(51) Int. Cl.: F16H 3/72, F02B 39/10

(54) **VEHICLE PROPULSION SYSTEMS USING MOTOR/ GENERATOR IN TRANSMISSION FOR POWERING ELECTRIC SUPERCHARGER**
EINEN MOTOR/GENERATOR IM KRAFTÜBERTRAGUNGSSYSTEM ZUM ANTRIEB EINES ELEKTRISCHEN AUFLADERS VERWENDENDE FAHRZEUGANTRIEBSSYSTEME
SYSTÈMES DE PROPULSION DE VÉHICULE UTILISANT UN MOTEUR-GÉNÉRATEUR DANS LA TRANSMISSION POUR L ALIMENTATION D UN SURCOMPRESSEUR ÉLECTRIQUE

(30) Priority: 13.06.2005 GB 0511965
(43) Date of publication of application: 12.03.2008
(73) Proprietor: Nexxtdrive Limited, London SW1Y 5HF (GB)
(72) Inventor: MOELLER, Frank, Milford, Stafford ST17 0UN (GB)
(74) Representative: Jennings, Nigel Robin
(86) International application number: PCT/GB2006/002121
(87) International publication number: WO 2006/134330

(56) References cited:
- EP-A- 1 413 801
- WO-A-20/04088168
- DE-A1- 10 302 059
- US-A1- 2003 145 597
- US-B1- 6 718 955

## Description

The present invention relates to vehicle propulsion systems of the type including a internal combustion engine with an inlet air duct and an output shaft, the output shaft being connected to the input shaft of a transmission system of continuously variable transmission ratio of the so called electric power split type, that is to say comprising a differential gearset including at least three shafts, two of which constitute the input shaft and output shaft, respectively, of the transmission system and all of which carry at least one gearwheel in mesh with at least one gearwheel carried by one of the other shafts, the transmission system further including two electric motor/generators, the rotors of which are connected to respective shafts and the electrical connections of the stators of which are connected to a controller arranged to control the flow of electrical power between them.

Various different types of electric power split transmission system are known and examples of such systems are disclosed in WO-A-04 08 8168 showing the features of the preamble of claim 1, WO -A-01/94142 and WO -A- 03/047897. Whilst the majority of the power transmitted through such systems is transmitted mechanically through the gearset, a proportion of it is transmitted electrically by virtue of the fact that one of the motor/generators is controlled to act as a generator and the controller transmits the power generated to the other motor/generator, which is controlled to act as a motor. By varying the amount of power which is transmitted electrically and the direction in which it is transmitted, the transmission ratio may be steplessly varied between wide limits.

However, as is discussed in more detail in EP -A- 1413801, the torque applied to the output shaft of the transmission system when starting from rest is very low. Briefly, this is because such transmission systems inherently provide a "geared neutral", that is to say the input shaft is rotated but no torque is applied to the output shaft, unless the motor/generators are loaded. If one ignores the slight inefficiencies of the two motor/generators and the various meshing gearwheels, if no work is done at the output shaft, then no power is supplied to the input shaft by the vehicle engine. Accordingly, at low output speeds, the torque applied to the output shaft is proportional to the sum of the torques on the motor/generators. The output torque available at zero output speed is therefore limited by the ratings of the motor/generators and this means that the vehicle will accelerate relatively slowly from rest.

The counterintuitive solution to this problem proposed in EP -A- 1413801 is that at zero and low speed of the output shaft, the controller is operated to direct at least a proportion of the electrical power produced by that motor/generator which is operating as a generator to an energy drain or consumer. Examples given of an energy drain are a dump resistor, a rechargeable battery or a further electric motor whose output shaft is connected to either the input shaft or the input shaft of the transmission system. If rapid acceleration from rest or low speed is required, the controller is operated to remove electrical power from at least the motor/generator operating as a generator and the power removed is now supplied by the engine which adds torque to the system. The torque at the output shaft is the sum of all the torques and thus the torque at the output shaft is increased not only by any increase in the torques at the two motor/generators but also by the increase in torque on the input shaft. The vehicle thus accelerates more rapidly than would have been the case if no power had been drained from the transmission system.

It is of course also well known to increase the power output of an engine by providing it with a turbocharger including a turbine situated in the exhaust duct and connected to a compressor wheel or impeller situated in the inlet duct.

Rotation of the turbine by the exhaust gas rotates the compressor wheel which boosts the engine inlet pressure and thus results in a greater amount of air being induced into the engine. It is also well known to provide such engines with a supercharger, namely a pump of any of a variety of types driven by an electric motor or driven mechanically from the crank shaft of the engine, for the purpose of boosting the inlet duct pressure.

The disadvantages of both these devices are also well known. Thus the speed of a turbocharger turbine is related to the cube of the speed of the exhaust gases and this means in practice that a turbocharger is not capable of producing any very significant boost pressure at low engine speeds. Furthermore, turbochargers suffer from so called "turbo lag", which means that after the accelerator pedal of an automotive engine has been depressed, there is a delay of several seconds before the engine speed picks up sufficiently for the turbocharger to begin to produce a significant boost pressure. The mechanical input power provided to the compressor wheel of a turbocharger is effectively "free" in that it is extracted from the high speed exhaust gases. However, if it should be attempted to drive the turbocharger faster than a speed predetermined by the speed of the exhaust gases, the back pressure in the exhaust duct rises unacceptably and this decreases the deficiency of the engine by increasing its fuel consumption. The power input to a supercharger, on the other hand, is derived directly or indirectly from the crank shaft or electrically and thus represents a significant power drain on the engine. Furthermore, large capacity, mechanically driven superchargers can be expensive.

As mentioned above, electrically driven superchargers are known. However the only electrical power source available on a conventional vehicle is the alternator and battery, both of which invariably supply power at 12 volts. The electrical power necessary to provide a substantial boost pressure in the inlet duct of an engine is many kilowatts and this means that at 12 volts the current required can be several hundred Amps. Present automotive electrical systems are simply not able to provide a current of this magnitude and electrical superchargers have therefore not found favour.

US 2003/0145597 discloses an automotive engine whose crankshaft is connected to a first electrical machine constituting a motor/generator. The stator connections of the first electrical machine are connected the stator connections of the second electrical machine, which also constitutes a motor/generator. The second electrical machine is positioned between the compressor and the exhaust turbine of a turbocharger. A controller is arranged to direct electrical power, at low engine speeds, from the first electrical machine to the second electrical machine in order to boost the output of the turbocharger. At high engine speeds, the second electrical machine acts a generator and supplies its power to the first electrical machine and this boosts the mechanical output of the engine.

According to the present invention, a vehicle propulsion system of the type referred to above is characterised in that the propulsion system also includes an electrically driven supercharger communicating with the inlet duct and that the controller is also connected to the supercharger and is programmed so that, at least at speeds of the transmission input shaft and/or transmission output shaft below a predetermined threshold value, it is selectively able to direct electrical power from at least one of the transmission motor/generators which is operating as a generator to the electrical motor of the supercharger so as to increase or decrease the pressure in the inlet duct and thus also the torque applied to the output shaft of the engine.

Although electrical superchargers are not practicable on a conventional vehicle with a 12 volt electrical system, the invention is based on the recognition that if the two motor/generators are to be able to transmit up to about one half of the total power output of the engine between them in the form of electrical power, this being a typical value for such transmission systems, then they will inherently be constructed to operate at a relatively high voltage, that is to say preferably in excess of 100V or even 200V. At that voltage the current which is necessary in order to provide sufficient power to the electrical supercharger will drop to a much lower value, which is perfectly feasible and does not constitute a problem.

The invention is based also on the important recognition that supercharging is required primarily at zero and low speeds of the output shaft of the transmission system in order to boost the output power of the engine and it is precisely at these speeds that it is desirable to extract power from at least one of the motor/generators so as to boost the torque available at the output shaft of the transmission. Thus when the supercharger is operated at zero or low speeds of the transmission output shaft it does not constitute an unwelcome power drain on the engine but instead constitutes a recipient for the electrical power which it is in any event required to dump from the transmission system in order to boost its output torque. Instead of wasting this dumped power, it is instead utilised productively in powering the electrical supercharger precisely at those times when it is most needed.

The resulting increase in the possible power and torque at low engine and transmission output speeds makes it possible to considerably downsize all types of IC engines, making the vehicles equipped with a propulsion system in accordance with the invention more efficient and resulting in lower fuel consumption and correspondingly lower CO₂ emissions.

In practice, the controller will also be capable of directing electrical power to one or more external electrical sources or loads, such as a battery. At low engine speeds, the controller will only direct power from the transmission to the supercharger if an increased inlet duct pressure is required. If it is not required, either no power is removed from the transmission system or the power is directed to some other load.

Although it is intended that power will be transmitted from the transmission system to the supercharger primarily or even solely when the output speed of the transmission is zero or low, that is to say below a predetermined threshold value, it is envisaged that there may be circumstances in which it is desirable to operate the supercharger at relatively high speeds of the transmission system, if only for relatively brief periods of time. Thus diesel engines with so called twin boost systems are known, that is to say with a turbocharger and a supercharger in series. Such systems are generally operated so that the boosting of the inlet duct pressure is performed by the supercharger at low engine speeds and by the turbocharger at high engine speeds and it is of course desirable to make use of the turbocharger rather than the supercharger, when this is possible, because the motive power for the turbocharger is "free", that is to say is derived from the energy of the exhaust gas that would otherwise be discharged uselessly to the atmosphere.

However, there may be circumstances with such twin boost systems in which it is desired to operate the supercharger briefly even at high engine speeds, resulting in very high power bursts, when overtaking for instance.

In some applications it is also feasible to use a supercharger of the type which may be driven by the gas flowing through it, e.g. of the positive displacement type, which when braked or overdriven, rather than driven, that is to say is operated as an air motor rather than air pump, is able to create a vacuum in the engine manifold, rather than a pressures above atmospheric. In this case the supercharger would act as a throttle and if the electrical machine connected to the supercharger is designed to act as motor/generator, similar to the electrical machines used in the transmission, most of the throttling energy can actually be regenerated, that is to say converted into electrical power which is then returned to the transmission system or to the vehicle battery.

Further features and details of the invention will be apparent from the following description of two specific embodiments which is given by way of example with reference to the accompanying drawings in which:-
Figure 1 is a diagrammatic view of a vehicle propulsion system in accordance with the invention;
Figure 2 is a schematic view of the supercharger and transmission system of the propulsion system as shown in Figure 1; and
Figure 3 is a diagrammatic view of certain components of a modified propulsion system in accordance with the invention.

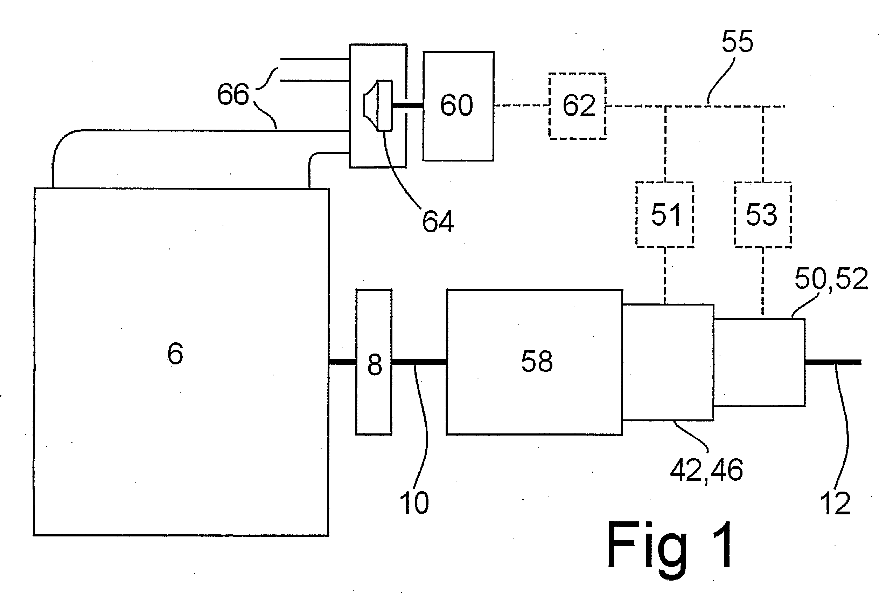

The highly diagrammatic view of Figure 1 shows an automotive propulsion system including an automotive engine 6, which includes an air inlet duct 66 and an output shaft 10, which includes a fly wheel 8 and is connected to a transmission system 58, which includes an output shaft 12 and two concentric motor/generators 42, 46 and 50, 52, which will be described in more detail below. The two motor/generators are connected to respective controllers 51, 53, which are connected to via a bus bar 55 to a common controller 62, as will also be described below. The controller 62 is connected to an electrical motor 60, which is connected to a fan or impeller 64 situated in the air inlet duct 66.

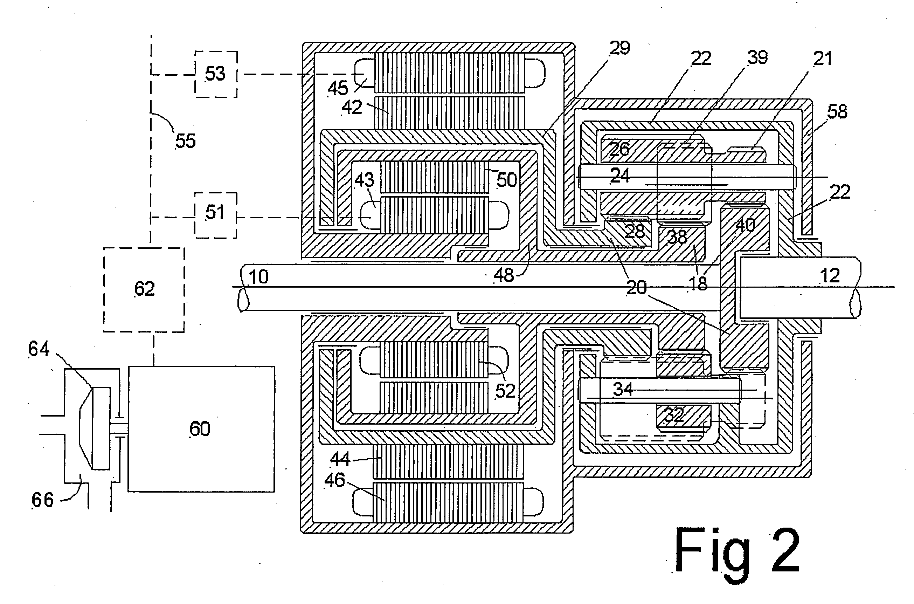

The transmission system is shown in detail in Figure 2 and includes a four branch differential gearset with an input shaft (first branch), constituted by the shaft 10 of the motor 6, and the output shaft 12 (second branch), connected to a common planet carrier 22. The transmission system also includes a so called minus planetary gearset 18 and a so called plus gearset 20. Both gearsets have no ring gear and are made up of straight or helical spur gears only, resulting in a very compact construction. A minus epicyclic gearset is one which incorporates three gear elements and in which rotation of the sun gear in one direction results in rotation of the gear element with which the planet gears are in mesh in the opposite direction whilst the carrier is held stationary. In a positive gearset, the sun gear and the gear element with which the planet gears are in mesh rotate in the same direction when the carrier is held stationary.

The minus gearset 18 comprise a sun wheel 40, which is carried by the input shaft 10 and is in mesh with a set of planet wheels 21. Each planet wheel 21 is rotatably carried by a respective planet shaft 24, which is integral with a further respective planet wheel 39 which is of different diameter and is also rotatably carried by the same planet shaft 24. Each planet wheel 39 is in mesh with a respective planet wheel 32, which is rotatably carried by a respective planet shaft 34 and is in mesh with a sun wheel 38 carried by a shaft 48. The planet shafts 24 and 34 are carried by the common cup-shaped carrier 22 which encloses the minus and plus gearsets. The carrier 22 is connected to rotate with the output shaft 12 and is supported by a bearing for rotation about the input shaft 10.

The plus gearset also includes the sun wheel 40 and planet wheels 21. The planet wheels 21 are also integral with a further respective planet wheel 26, which is thus integral with a respective planet wheel 39. The planet wheels 26 and 39 are in this case of the same diameter and thus effectively constitute single planet wheels, but they could also be of different diameter. The planet wheels 26 are in mesh with a sun wheel 28. The sun wheel 28 is connected to a shaft 29, which is connected to the rotor 42 of one of the electrical motor/generators, the stator 46 of which is connected to the outer casing 58. The shaft 48 is connected the rotor 50 of the other motor/generator, the stator 52 of which is also connected to the outer casing.

The electrical connections 45, 43 of the two stators 46, 52 are connected together via the bus bar 55 and respective control units 51 and 53 so that they can exchange electrical power. The bus bar is also connected to controller 62, which is connected to the electrically driven supercharger 60, which includes the impeller 64 situated in the air inlet duct 66 of the engine 6.

In use, one of the motor/generators acts as a generator and transmits electrical power to the other motor/generator, which acts as a motor. The amount of electrical power so transmitted may be varied by means of the controllers 51,53, thereby altering the transmission ratio of the transmission system. Power is thus transmitted through the transmission system both mechanically and electrically, in proportions which vary with varying transmission ratio, which is why the transmission system is also referred to as a power split transmission. There are in general two transmission ratios at which the electrical power transmitted between the two motor/generators is zero and these are referred to as node points. Further details of the construction and operation of the transmission system are disclosed in WO -A- 04/088168.

In use, when the engine is running but the vehicle is stationary, the transmission system provides a geared neutral. When it is desired to move away from rest, the torque that would be applied to the output shaft would be very low, for the reasons explained above. The controller 62 is, however, programmed to direct at least a proportion and potentially substantially all the electrical power generated by that motor/generator which is operating as a generator to the electrical supercharger 60. This extraction of electrical power from the transmission system results in a significant increase in the torque applied to the output shaft 12, for the reasons explained above. The electrical power transmitted to the supercharger 60 is used to drive it electrically, thereby boosting the air pressure in the inlet duct and thus in turn increasing the output power of the engine. Once a predetermined speed of the engine shaft 10 or output shaft 12 and/or boost pressure has been reached, as sensed by sensors (not shown) connected to the controller 62, continued supercharging is generally not required and the controller is operated to terminate the transmission of electrical power to the supercharger. In this preferred embodiment, the motor/generators operate at a voltage in excess of 200V. The current that needs be transmitted to the supercharger in order to transmit sufficient power to it, to provide the required boost pressure, is therefore relatively low and well within the capabilities of an automotive electrical system.

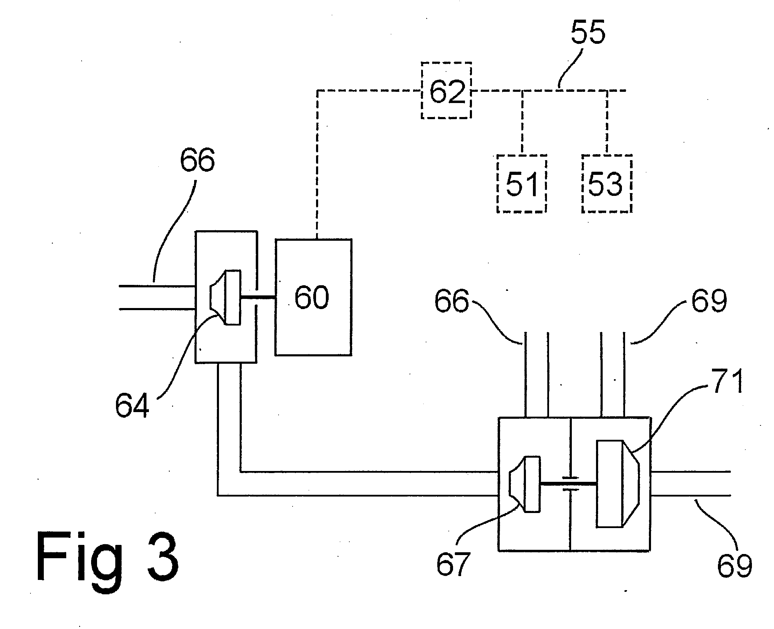

The modified propulsion system shown in part in Figure 3 includes not only an electrically powered supercharger 60, which is controlled substantially as described above but also a conventional turbocharger. The exhaust duct 69 of the engine (which is not shown) includes an exhaust gas turbine 71, which is mechanically coupled to an impeller 67 situated in the air inlet duct 66. At low engine speeds, the turbocharger 67, 71 is incapable of producing any significant boost of the inlet duct pressure and any boost in this pressure is produced by the electrical supercharger 60. However, at higher engine speeds, "free" energy is available in the exhaust duct 69 and the turbocharger may be used to increase the pressure in the inlet duct. If an even higher inlet pressure is required the electrical supercharger 60 may also be selectively operated, as required.

## Claims

1. An automotive vehicle propulsion system including an internal combustion engine (6) with an inlet air duct (66) and an output shaft (10), the output shaft being connected to the input shaft of a transmission system (58) of continuously variable transmission ratio, comprising a differential gearset, comprising at least three shafts, two (10,12) of which constitute the input shaft and output shaft, respectively, of the transmission system and all of which carry at least one gearwheel in mesh with at least one gearwheel carried by one of the other shafts, the transmission system further including at least two electrical motor/generators (42,46; 50,52), the rotors (42,50) of which are connected to respective shafts (29,48) and the electrical connections (45,43) of the stators (46,52) of which are connected to a controller (62) arranged to control the flow of electrical power between them, **characterised in that** the propulsion system also includes an electrically driven supercharger (60,64) communicating with the inlet duct (66) and the controller (62) is also connected to the supercharger and is programmed so that, at least at speeds of the transmission input shaft and/or transmission output shaft (12) below a predetermined threshold value, it is selectively able to direct electrical power from at lest one of the motor/generators (42,46; 50,52) which is operating as a generator to the electrical motor (60) of the supercharger (60,64) so as to increase or decrease the pressure in the inlet duct (66) and thus also the torque applied to the output shaft (10) of the engine.

2. A system as claimed in claim 1 which additionally includes a turbocharger (67,71) and the controller (62) is programmed to transmit electrical power to the supercharger (60,64) at low engine speeds at which the turbocharger is not capable of providing a substantial increase in the air pressure in the inlet duct.

3. A system as claimed in claim 1, in which the supercharger (60,64) is of the type which may be driven by the gas flowing through it and the electric motor (60) which operates it is a motor/generator, whereby the supercharger may be used as an engine throttle and the throttling losses may be converted into electricity.

## Patentansprüche

1. Eigenantriebs-Fahrzeug-Antriebssystem mit einem Verbrennungsmotor (6) mit einer Lufteinlassleitung (66) und einer Ausgangswelle (10), wobei die Ausgangswelle mit der Eingangswelle eines Transmissionssystems (58) mit einem stufenlos regelbaren Transmissionsverhältnis verbunden ist, welches ein Differenzialgetriebe mit mindestens drei Wellen aufweist, von welchen zwei (10, 12) die Eingangswelle bzw. die Ausgangswelle des Transmissionssystems bilden und welche alle mindestens ein Zahnrad tragen, das mit mindestens einem Zahnrad kämmt, welches von einer der andere Wellen getragen wird, wobei das Transmissionssystem weiters mindestens zwei Elektromotoren/Generatoren (42, 46; 50, 52) aufweist, deren Rotoren (42, 50) mit jeweiligen Wellen (29, 48) verbunden sind, und wobei die elektrischen Anschlüsse (45, 43) ihrer Statoren (46, 52) mit einer Steuereinheit (62) verbunden sind, die eingerichtet ist, um den Fluss des elektrischen Stroms zwischen diesen zu regeln, **dadurch gekennzeichnet, dass** das Antriebssystem auch ein elektrisch angetriebenes Ladegebläse (60, 64) inkludiert, das mit der Einlassleitung (66) kommuniziert, und dass die Steuereinheit (62) auch mit dem Ladegebläse verbunden und so programmiert ist, dass sie, zumindest bei Drehzahlen der Transmissions-Eingangswelle und/oder der Transmissions-Ausgangswelle (12) unterhalb eines vorbestimmten Schwellenwerts, den elektrischen Strom von mindestens einem der Motoren/Generatoren (42, 46; 50, 52), der als Generator arbeitet, selektiv zum Elektromotor (60) des Ladegebläses (60, 64) leitet, um den Druck in der Einlassleitung (66) und damit auch das an die Ausgangswelle (10) des Motors angelegte Drehmoment zu erhöhen oder zu verringern.

2. System nach Anspruch 1, welches zusätzlich einen Turbolader (67, 71) aufweist, und wobei die Steuereinheit (62) programmiert ist, um bei niedrigen Motordrehzahlen, bei welchen der Turbolader eine wesentliche Erhöhung des Luftdrucks in der Einlassleitung nicht vorsehen kann, elektrischen Strom zum Ladegebläse (60, 64) weiterzuleiten.

3. System nach Anspruch 1, bei welchem das Ladegebläse (60, 64) von jenem Typ ist, der durch das Gas, welches durch ihn hindurch strömt, angetrieben werden kann, und wobei der Elektromotor (60), welcher ihn betreibt, ein Motor/Generator ist, wodurch das Ladegebläse als Motor-Drossel verwendet werden kann und die Drosselungsverluste in Elektrizität umgewandelt werden können.

## Revendications

1. Système de propulsion de véhicule automobile comportant un moteur à combustion interne (6) avec un conduit d'air d'admission (66) et un arbre de sortie (10), l'arbre de sortie étant relié à l'arbre d'entrée d'un système de transmission (58) d'un rapport de transmission variable en continu, comprenant un train d'engrenages différentiel, comprenant au moins trois arbres, dont deux (10, 12) constituent respectivement l'arbre d'entrée et l'arbre de sortie, du système de transmission et dont tous portent au moins une roue d'engrenage en prise avec au moins une roue d'engrenage portée par l'un des autres arbres, le système de transmission comportant en outre au moins deux moteurs/générateurs électriques (42, 46 ; 50, 52), dont les rotors (42, 50) sont reliés aux arbres (29, 48) respectifs et dont les connexions électriques (45, 43) des stators (46, 52) sont reliées à un régulateur (62) disposé pour commander le flux de courant électrique entre eux, **caractérisé en ce que** le système de propulsion comprend aussi un surcompresseur (60, 64) entraîné électriquement communiquant avec le canal d'air (66) et le régulateur (62) est aussi relié au surcompresseur et est programmé de sorte que, au moins à des vitesses d'arbre d'entrée de transmission et/ou d'arbre de sortie de transmission (12) inférieures à une valeur seuil prédéterminée, il soit possible sélectivement de diriger le courant électrique à partir d'au moins l'un des moteurs/générateurs (42, 46 ; 50, 52) qui fonctionne comme un générateur vers le moteur électrique (60) du surcompresseur (60, 64) de sorte à augmenter ou réduire la pression dans le canal d'air (66) et ainsi aussi le couple appliqué à l'arbre de sortie (10) du moteur.

2. Système selon la revendication 1 qui comporte en outre un turbocompresseur (67, 71) et le régulateur (62) est programmé pour transmettre le courant électrique au surcompresseur (60, 64) à des régimes moteur bas, auxquels le turbocompresseur n'est pas capable de fournir une augmentation importante de pression d'air dans le canal d'air.

3. Système selon la revendication 1, dans lequel le surcompresseur (60, 64) est du type qui peut être entraîné par le gaz le traversant et le moteur électrique (60) qui le fait fonctionner est un moteur/générateur, moyennant quoi le surcompresseur peut être utilisé comme un papillon des gaz du moteur et les pertes d'étranglement peuvent être converties en électricité.
